# EUROPEAN PATENT APPLICATION

(11) **EP 4 438 808 A1**
(43) Date of publication of application: **02.10.2024**
(21) Application number: 22898533.9
(22) Date of filing: 21.11.2022
(51) Int. Cl.: D21H 19/38, B41M 5/26

(54) **MEDIUM FOR ULTRAVIOLET LASER PRINTING, PRINTED MATERIAL AND PROCESSED ARTICLE**

(30) Priority: 24.11.2021 JP 2021190374
(71) Applicant: Oji Holdings Corporation, Chuo-ku Tokyo 104-0061 (JP)
(72) Inventor: SATO, So, Tokyo 104-0061 (JP); AZUMAGAWA, Kazuki, Tokyo 104-0061 (JP)
(74) Representative: Godemeyer Blum Lenze Patentanwälte Partnerschaft mbB - werkpatent
(86) International application number: PCT/JP2022/043026
(87) International publication number: WO 2023/095750

(57) **Abstract**

An object of the present invention is to provide a medium for ultraviolet laser printing, in which an image printed by ultraviolet laser printing is excellent in viewability, a print product after printing is excellent in smoothness and furthermore smoking in printing is suppressed, and another object thereof is to provide a print product in which the medium for ultraviolet laser printing is used, and a processed article obtained with the medium for ultraviolet laser printing or the print product. The medium for ultraviolet laser printing of the present invention comprises a substrate layer and a print layer comprising titanium oxide, in which the substrate layer and the print layer are in direct contact with each other, an air permeability of the substrate layer is 50,000 seconds or less, and a titanium oxide content in the print layer is 0.04 g/m² or more and 5.0 g/m² or less.

## Description

### Technical Field

The present invention relates to a medium for ultraviolet laser printing, a printed material, and a processed article.

### Background Art

Conventionally, labelling or ink-jet printing has been performed in order to display dates such as a production date and a ship date, and variable information such as a bar code on a package of a container or the like in which a storage object is stored.

A method of printing-out by laser light irradiation has also been proposed and, for example, PTL 1 has disclosed a stacked article for laser printing, produced by coating an aluminum-deposited surface of aluminum-deposited paper with white ink, black ink and overprint varnish (OP varnish), in order to provide a stacked article for laser printing-out, and a print-out article, in which clear printing-out is easily performed by laser light irradiation at a high speed and a portion where printing-out is applied is excellent in various resistances.

PTL 2 has disclosed an ink composition comprising a first titanium oxide particle having an average particle size of 150 nm or less, to be used for formation of a laser marking layer to be varied in color by irradiation with ultraviolet laser, for the purpose of providing a technique which generates relatively less heat and which is preferably applicable to laser marking of a packaging material.

### Citation List

### Patent Literature

PTL 1: JP H9-123607 A
PTL 2: JP 2020-75943 A

### Summary of Invention

### Technical Problem

A method involving directly placing ink on a package surface with a thermal printer or an ink-jet printer is currently frequently used as a printing procedure on a surface of a package, a label, a pressure-sensitive adhesive tape, or the like. However, consumables such as an ink ribbon for thermal printers and an ink for ink-jet printers are expensive, and a problem is that the running cost for printing much varying information is increased. If the exchange of such consumables is neglected, printing leakage may also be caused. While direct printing of varying information on a package according to offset printing with an UV-curable ink is also performed, any print scratch, character deficiency and/or the like may be caused due to grime on a package surface, variation in thickness of a package, and/or the like.

The method described in PTL 1, although can allow for an increase in speed, is a technique involving removing an upper layer easily absorbing laser light, by irradiation with CO₂ laser light, to thereby expose a lower layer, and forming a viewable character and/or the like from the difference in color between the upper layer and the lower layer, and therefore the material of the upper layer is limited to one easily absorbing laser light and, on the contrary, the material of the lower layer is limited to one hardly absorbing laser light and also capable of acquiring the color contrast with the upper layer. In other words, the material of the upper layer is a carbon black-based material (black) easily absorbing laser light and the material of the lower layer is a titanium oxide-based material (white), and a character or the like formed by irradiation with laser light is a white character on a black base and is inferior in viewability.

The method described in PTL 2, although can allow for printing by laser irradiation, is not studied about smoothness after printing.

An object of the present invention is to provide a medium for ultraviolet laser printing, in which an image printed by ultraviolet laser printing is excellent in viewability, a print product after printing is excellent in smoothness and furthermore smoking in printing is suppressed. Another object of the present invention is to provide a print product in which the medium for ultraviolet laser printing is used, and a processed article obtained with the medium for ultraviolet laser printing or the print product.

### Solution to Problem

The present inventor has found that an image printed is excellent in viewability and furthermore a print product after printing is excellent in smoothness by a medium for ultraviolet laser printing, comprising a print layer comprising titanium oxide, on a substrate layer, in which the titanium oxide content is in a specified range and furthermore the air permeability of the substrate layer is a specified value or less. The present invention relates to the following <1> to <9>.
<1> A medium for ultraviolet laser printing, comprising a substrate layer and a print layer comprising titanium oxide, wherein the substrate layer and the print layer are in direct contact with each other, an air permeability of the substrate layer is 50,000 seconds or less, and a titanium oxide content in the print layer is 0.04 g/m² or more and 5.0 g/m² or less.
<2> The medium for ultraviolet laser printing according to <1>, wherein the substrate layer includes a paper substrate layer, and pulp constituting the paper substrate layer has a length-weighted average fiber length of 0.70 mm or more.
<3> The medium for ultraviolet laser printing according to <1> or <2>, wherein the print layer is a laminate layer comprising titanium oxide or a coating layer comprising titanium oxide.
<4> The medium for ultraviolet laser printing according to any one of <1> to <3>, wherein the print layer has a thickness of 1.0 µm or more and 45 µm or less.
<5> The medium for ultraviolet laser printing according to any one of <1> to <4>, further comprising a resin layer on the print layer.
<6> A print product obtained from the medium for ultraviolet laser printing according to any one of <1> to <5>, wherein the print layer has a printed region comprising discolored titanium oxide in at least one portion thereof, and a ratio of a Raman intensity assigned to titanium oxide in the printed region to a Raman intensity assigned to titanium oxide in a non-printed region is 0.70 or less.
<7> A processed article obtained with the medium for ultraviolet laser printing according to any one of <1> to <5> or the print product according to <6>.
<8> Use of the medium for ultraviolet laser printing according to any one of <1> to <5>, for ultraviolet laser printing.
<9> A method for producing a print product, comprising a step of performing printing by irradiation of a medium for ultraviolet laser printing, with ultraviolet light, and thus discoloration of an irradiated region, wherein the medium for printing is the medium for ultraviolet laser printing according to any one of <1> to <5>.

### Advantageous Effects of Invention

The present invention provides a medium for ultraviolet laser printing, in which an image printed by ultraviolet laser printing is excellent in viewability and furthermore a print product after printing is excellent in smoothness. The present invention further provides a print product in which the medium for ultraviolet laser printing is used, and a processed article in which the medium for ultraviolet laser printing or print product is used.

### Brief Description of Drawings

[Fig. 1] Fig. 1 is a cross-sectional schematic view illustrating one embodiment of the medium for ultraviolet laser printing of the present embodiment.
[Fig. 2] Fig. 2 is a cross-sectional schematic view illustrating another embodiment of the medium for ultraviolet laser printing of the present embodiment.

### Description of Embodiments

### [Medium for ultraviolet laser printing]

A medium for ultraviolet laser printing of the present embodiment (hereinafter, also simply referred to as "medium for printing") comprises a substrate layer and a print layer comprising titanium oxide, in which the substrate layer and the print layer are in direct contact with each other, an air permeability of the substrate layer is 50,000 seconds or less, and a titanium oxide content in the print layer is 0.04 g/m² or more and 5.0 g/m² or less.

The present embodiment provides a medium for ultraviolet laser printing, in which an image printed by ultraviolet laser printing is excellent in viewability and furthermore a print product after printing is excellent in smoothness.

The detailed reason why the above effects are obtained, although is not clear, is partially considered as follows. In the present invention, a print layer comprising titanium oxide is stacked on a substrate layer with being in direct contact with the substrate layer, and the titanium oxide content is 0.04 g/m² or more. A print layer having a specified amount or more of titanium oxide is comprised on the substrate layer, thereby allowing for printing by discoloration of titanium oxide in a portion irradiated with ultraviolet laser, in the print layer, due to laser irradiation with ultraviolet laser. It is considered that such discoloration of titanium oxide is the change from white to black due to the change in ionic valence of titanium oxide comprised in the print layer, from tetravalent to trivalent, and thus the occurrence of any oxygen defect, and therefore viewing can be made. It is considered that the ionic valence of titanium oxide is changed during irradiation with light energy corresponding to the band gap of titanium oxide. The band gap of titanium oxide, while is varied depending on the crystal system, is generally about 3.0 to 3.2 eV, and the wavelength of the corresponding light is 420 nm or less. Therefore, it is difficult to apply printing due to the change in ionic valence of titanium oxide as in the present invention, even by use of laser light at a wavelength of more than 420 nm (for example, 532 nm, 1064 nm, or 10600 nm).

A print product can be obtained by discoloration of titanium oxide due to irradiation with ultraviolet laser. On the other hand, titanium oxide is reduced during discoloration, thereby causing vaporization of oxygen, and moisture in the print product, and generating water vapor. It has been found that a phenomenon occurs where, if oxygen or water vapor generated is difficult to permeate through the substrate layer when released from the print layer, a portion irradiated with ultraviolet laser is swollen due to such oxygen or water vapor generated. It is considered with respect to the present invention that the air permeability of the substrate layer can be a specified value or less to allow oxygen or water vapor generated by ultraviolet laser irradiation to permeate through the substrate layer and allow the above phenomenon of swelling of a print product and the occurrence of unevenness to be suppressed, thereby providing a print product excellent in smoothness.

It is also considered that a titanium oxide content of 5.0 g/m² or less suppresses a phenomenon where oxygen or water vapor is so much generated that a print product is swollen and unevenness occurs, and provides a print product excellent in smoothness. It is also considered that smoking in printing is suppressed.

Hereinafter, the present invention will be described in more detail.

The medium for ultraviolet laser printing of the present embodiment will be described with reference to the drawings.

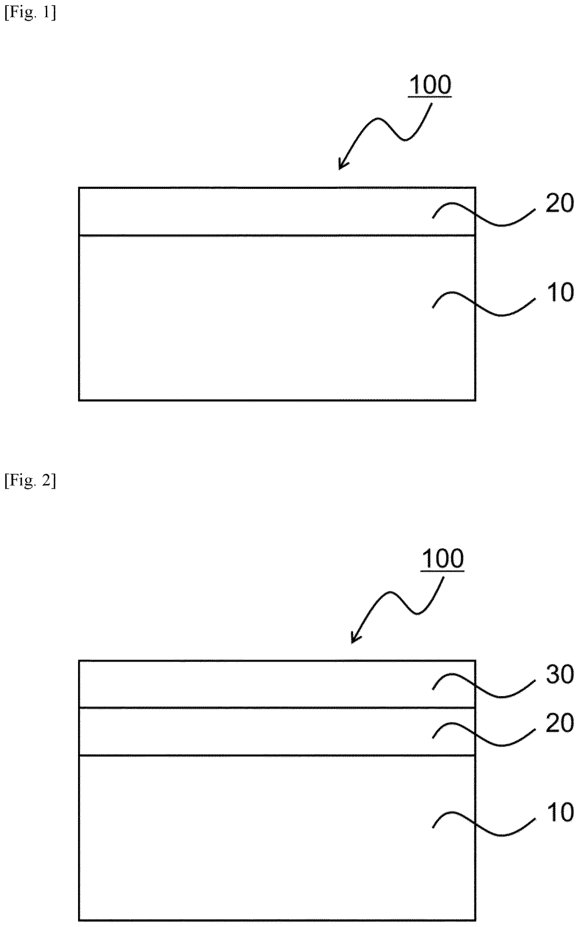

Fig. 1 is a cross-sectional schematic view illustrating one embodiment of the medium for ultraviolet laser printing of the present embodiment. A medium 100 for ultraviolet laser printing, illustrated in Fig. 1, comprises a substrate layer 10, and a print layer 20 comprising titanium oxide, and the substrate layer 10 and the print layer 20 are in direct contact with each other.

Fig. 2 is a cross-sectional schematic view illustrating another embodiment of the medium for ultraviolet laser printing of the present embodiment. A medium 100 for ultraviolet laser printing, illustrated in Fig. 2, comprises a substrate 10, and a print layer 20 comprising titanium oxide, and the substrate layer 10 and the print layer 20 are in direct contact with each other. In Fig. 2, a resin layer 30 is further stacked on the print layer. The resin layer preferably comprises substantially no titanium oxide.

The print layer may be a laminate layer comprising titanium oxide or a coating layer comprising titanium oxide, as described below. The embodiment of Fig. 1 is preferable when the print layer is a laminate layer comprising titanium oxide, and the embodiment of Fig. 2 is preferable when the print layer is a coating layer comprising titanium oxide.

When the medium for ultraviolet laser printing of the present embodiment has the configuration of Fig. 1, a problem is that, if the titanium oxide content in the print layer is high, reduction reaction of titanium oxide occurs relatively around a surface of the print layer and thus the amount of smoking is large, although the occurrence of unevenness after printing is suppressed.

On the other hand, when the medium for ultraviolet laser printing has the configuration of Fig. 2, the resin layer is further comprised on the print layer and thus smoking in ultraviolet laser irradiation tends to be suppressed, but a problem is that oxygen or water vapor generated in ultraviolet laser irradiation cannot permeate through the resin layer and thus the print product is swollen and unevenness occurs if the air permeability of the substrate layer is low.

The medium for ultraviolet laser printing comprises the print layer on the substrate layer, and the print layer may be formed on at least one surface or both surfaces of the substrate layer, and the medium preferably comprises the print layer on only one surface thereof. The medium may comprise the print layer on the entire surface of the substrate layer, or may comprise the print layer on only a partial region (portion) onto which printing is desirably applied.

### <Substrate layer>

In the present embodiment, the substrate layer can be provided with the print layer, is not particularly limited as long as it is formed from a substrate having a desired air permeability, and may be appropriately selected from the group consisting of various substrates such as paper, a non-woven fabric, and a fabric.

Among them, at least one selected from the group consisting of paper, a non-woven fabric and a fabric is more preferable, at least one selected from the group consisting of paper and a non-woven fabric is further preferable, and paper is still more preferable from the viewpoint of ease of formation of the print layer. When the substrate constituting the substrate layer is paper, the substrate is also referred to as "paper substrate."

For example, the paper substrate may be coating paper in which the coating layer is provided on paper, and the coating layer may be provided on a surface of the paper substrate, the surface facing the print layer, or an opposite surface of the surface, and is not particularly limited.

### (Paper substrate)

Examples of raw material pulp constituting the paper substrate include wood pulp, non-wood pulp, and deinking pulp. Examples of the wood pulp include, but not particularly limited, chemical pulp such as leaf bleached kraft pulp (LBKP), leaf unbleached kraft pulp (LUKP), needle bleached kraft pulp (NBKP), needle unbleached kraft pulp (NUKP), sulfite pulp (SP), dissolving pulp (DP), soda pulp (AP), and oxygen bleached kraft pulp (OKP), semichemical pulp such as semi-chemical pulp (SCP) and chemi-ground wood pulp (CGP), and mechanical pulp such as ground pulp (GP), thermomechanical pulp (TMP) and chemi-thermomechanical pulp (CTMP). Examples of the non-wood pulp include, but not particularly limited, cotton type pulp such as cotton linter and cotton lint, and non-wood type pulp such as hemp, wheat straw, bamboo and bagasse. Examples of the deinking pulp include, but not particularly limited, deinking pulp with waste paper as a raw material. The raw material pulp may be used singly or as a mixture of two or more of the above. The raw material pulp may be used as a mixture thereof with an organic synthetic fiber such as a polyamide fiber or a polyester fiber, a recycled fiber such as a polynosic fiber, or an inorganic fiber such as a glass fiber, a ceramic fiber, or a carbon fiber.

The raw material pulp is preferably any of wood pulp and deinking pulp from the viewpoint of availability. The raw material pulp is particularly wood pulp, preferably chemical pulp, more preferably kraft pulp, further preferably at least one selected from the group consisting of leaf kraft pulp of eucalyptus, acacia, and the like, and needle kraft pulp of pine, cryptomeria, and the like, still more preferably at least one selected from the group consisting of leaf bleached kraft pulp (LBKP) and needle bleached kraft pulp (NBKP), from the viewpoint of formation uniformity.

The paper substrate is obtained by papermaking with a pulp slurry to which a filling agent is, if necessary, added.

Not only the pulp, but also known filling agent(s) for papermaking, such as a loading material, a sizing agent, a dry paper strengthening agent, a wet paper strengthening agent (for example, polyamide polyamine epichlorohydrin), a yield improver (for example, aluminum sulfate), a freeness improver, a pH adjuster, a softener, an antistatic agent, a defoamer, and/or a dye/pigment can be, if necessary, added into the paper substrate.

Examples of the loading material can include kaolin, talc, titanium oxide, heavy calcium carbonate, light calcium carbonate, calcium sulfite, gypsum, fired kaolin, white carbon, amorphous silica, delaminated kaolin, diatomaceous earth, magnesium carbonate, aluminum hydroxide, calcium hydroxide, magnesium hydroxide, and zinc hydroxide.

Examples of the sizing agent include rosin-based, alkyl ketene dimer-based, alkenyl succinic anhydride-based, styrene-acrylic, higher fatty acid-based, and petroleum resin-based sizing agents.

A known wet paper machine, for example, a paper machine such as a long net paper machine, a gap former-type paper machine, a cylindrical paper machine, or a short net-type paper machine can be appropriately selected and used in papermaking of the paper substrate. Next, a paper layer formed by the paper machine is conveyed on a felt and dried by a dryer. A multi-stage cylinder dryer may also be used as a pre-dryer before drying by a dryer.

The paper substrate obtained as described above may be subjected to a surface treatment with a calender to thereby achieve uniformization of the thickness and profile and achieve an enhancement in printability. Such a calender treatment can be made by use of a known calender treatment machine appropriately selected.

The paper substrate may be appropriately selected from the group consisting of conventionally known paper substrates such as liner base paper, kraft paper, high-quality paper, coat paper, or the like, and then used.

The paper substrate may be single-layer or multi-layer, or may have a multi-layer structure having a different pulp composition.

The length-weighted average fiber length of the pulp constituting the paper substrate is preferably 0.70 mm or more and 3.00 mm or less, more preferably 0.73 mm or more, further preferably 0.75 mm or more, and the upper limit is not particularly limited and is more preferably 2.50 mm or less, further preferably 2.25 mm or less.

The length-weighted average fiber length of the pulp constituting the paper substrate is preferably 0.70 mm or more because a void in the paper substrate is increased and thus oxygen or water vapor generated by ultraviolet laser irradiation can rapidly permeate through the paper substrate side and a print product excellent in smoothness is obtained.

The length-weighted average fiber length of the pulp constituting the paper substrate is measured by a method described in Examples.

The Canadian standard freeness (CSF) of the wood pulp for use in the paper substrate is preferably 150 mL or more and 800 mL or less, more preferably 300 mL or more, further preferably 400 mL or more, and more preferably 750 mL or less, further preferably 700 mL or less from the viewpoint that strength and smoothness to be demanded for the paper substrate are obtained.

The CSF here means the Canadian standard freeness according to JIS P 8121-2:2012.

The basis weight of the paper substrate is preferably 30 g/m² or more and 700 g/m² or less, more preferably 40 g/m² or more, further preferably 50 g/m² or more, still more preferably 60 g/m² or more, and more preferably 500 g/m² or less, further preferably 350 g/m² or less from the viewpoint of strength of the medium for printing and ease of processing of a package.

The basis weight is measured according to the method prescribed in JIS P 8124:2011.

The thickness of the paper substrate is not particularly limited and is preferably 30 µm or more and 900 µm or less, more preferably 50 µm or more, further preferably 70 µm or more, still more preferably 80 µm or more, and more preferably 700 µm or less, further preferably 500 µm or less from the viewpoint of strength of the medium for printing and ease of processing of a package.

The thickness of the paper substrate can be measured by a method described in JIS P 8118:2014.

The density of the paper substrate is not particularly limited, and is preferably 0.30 g/cm³ or more and 1.20 g/cm³ or less, more preferably 0.40 g/cm³ or more, further preferably 0.45 g/cm³ or more, and more preferably 1.00 g/cm³ or less, further preferably 0.90 g/cm³ or less from the viewpoint of strength of the medium for printing and ease of processing of a package.

The density of the paper substrate is calculated from the basis weight of the paper substrate and the paper thickness.

### (Fabric, non-woven fabric)

When the substrate is a fabric or a non-woven fabric, raw materials constituting the fabric and the non-woven fabric include natural fibers such as cotton, hemp, a cellulose fiber and wool; synthetic fibers such as polycarbonate, polyetherimide, polyester, polyurethane and polyamide (nylon); and recycled fibers such as rayon and acetate.

The air permeability of the substrate layer is 50,000 seconds or less, preferably 40,000 seconds or less, more preferably 30,000 seconds or less, further preferably 20,000 seconds or less, still more preferably 15,000 seconds or less from the viewpoint of an enhancement in smoothness after printing, and the lower limit is not particularly limited.

When irradiation with ultraviolet laser is made, oxygen or water vapor is generated according to reduction of titanium oxide. When the air permeability of the substrate is 50,000 seconds or less, oxygen or water vapor generated permeates toward the substrate layer, and thus the occurrence of unevenness on a print product surface is suppressed and a print product excellent in smoothness is obtained.

A substrate layer having a desired air permeability may be selected as the substrate layer, and when the substrate is the paper substrate, a substrate having a desired air permeability can be selected by selecting the presence and the type of a coating layer, the density and the thickness of the paper substrate, and the like.

The air permeability of the substrate layer is measured by a method described in Examples. While the air permeability can be measured from the resulting medium for printing, the air permeability of the substrate layer used may also be adopted.

### <Print layer>

The medium for ultraviolet laser printing comprises a print layer comprising titanium oxide, which is stacked with being adjacent to the substrate. The print layer may be provided by coating or by lamination without particular limitation. In other words, the print layer is preferably a laminate layer comprising titanium oxide or a coating layer comprising titanium oxide.

The titanium oxide content in the print layer is 0.04 g/m² or more, preferably 0.10 g/m² or more, more preferably 0.20 g/m² or more, further preferably 0.30 g/m² or more, still more preferably 0.50 g/m² or more from the viewpoint of providing a sufficient print density and from the viewpoint of providing a print product excellent in smoothness, and is 5.0 g/m² or less, preferably 4.0 g/m² or less, more preferably 3.0 g/m² or less, further preferably 2.5 g/m² or less, still more preferably 2.0 g/m² or less from the viewpoint of providing a print product excellent in smoothness by suppression of excess generation of oxygen or water vapor due to ultraviolet laser irradiation, from the viewpoint of leveling-off of the print density and suppression of an increase in cost due to an excessive amount of titanium oxide comprised, from the viewpoint of ease of formation of the print layer, from the viewpoint of suppression of smoking in ultraviolet laser irradiation, by an increase in titanium oxide content, and from the viewpoint of suppression of a reduction in print density due to the smoking.

The thickness of the print layer is preferably 1.0 µm or more and 45 µm or less, more preferably 1.5 µm or more, and more preferably 35 µm or less from the viewpoint of an increase in print density and from the viewpoint of an enhancement in smoothness after printing.

The thickness of the print layer is preferably 1.0 µm or more because absorption of laser light occurs in the entire thickness direction in ultraviolet laser irradiation and thus the print density is increased and an image excellent in viewability is obtained. If the thickness of the print layer is too thick, oxygen or water vapor generated due to titanium oxide reduced by irradiation with ultraviolet laser is hardly left from the print layer to result in tendencies to cause unevenness on the print product and to deteriorate smoothness of the print product. The thickness of the print layer is preferably 45 µm or less because a print product excellent in smoothness is obtained.

The thickness of the print layer is measured from an observation image of a cross section of the medium for printing with an electron microscope (SEM).

The print layer preferably comprises a thermoplastic resin in addition to titanium oxide.

### (Titanium oxide)

When the print layer is provided by coating, the titanium oxide is preferably comprised in a coating liquid and coated with the liquid, and the coating liquid is more preferably an aqueous coating liquid.

On the other hand, when the titanium oxide is provided by lamination, it is preferably comprised in a film to be stacked, and then stacked.

The titanium oxide comprised in the print layer is represented by compositional formula TiO₂, and is also called titanium dioxide or titania.

The titanium oxide may have any crystal structure or may be amorphous, and is preferably at least one selected from the group consisting of rutile-type titanium oxide, anatase-type titanium oxide, brookite-type titanium oxide, and amorphous titanium oxide, more preferably at least one selected from the group consisting of rutile-type titanium oxide and anatase-type titanium oxide, and further preferably rutile-type titanium oxide from the viewpoints of availability and stability.

The crystal shape of the titanium oxide can be determined by a known method, and can be specifically determined by, for example, analysis of a Raman spectrum or XRD pattern. For example, when the crystal shape is identified from a Raman spectrum, in general, peaks at 447 ± 10 cm⁻¹ and 609 ± 10 cm⁻¹ are observed in the case of a rutile-type and peaks at 395 ± 10 cm⁻¹, 516 ± 10 cm⁻¹, and 637 ± 10 cm⁻¹ are observed in the case of an anatase-type.

The titanium oxide may be used singly or in combinations of two or more kinds thereof.

The shape of the titanium oxide is not particularly limited, and may be any of, for example, irregular, spherical, rod, and acicular shapes.

When the titanium oxide is irregular or spherical, the particle size of the titanium oxide is not particularly limited, and is preferably 0.01 µm or more and 20.0 µm or less, more preferably 0.10 µm or more, further preferably 0.15 µm or more, and more preferably 10.0 µm or less, further preferably 5.0 µm or less, still more preferably 3.0 µm or less, particularly preferably 1.0 µm or less from the viewpoint of providing a sheet medium excellent in surface smoothness.

The particle size of the titanium oxide in the print layer is calculated from a SEM image of ash obtained by burning of the medium for printing or print product in a condition of 525°C in a muffle furnace, the image being obtained with a scanning-type electron microscope (SEM, S5200 or the like manufactured by Hitachi High-Tech Corporation).

An ash sample to be tested with a scanning-type electron microscope is produced by obtaining a 0.01% by mass slurry due to dispersion in ethanol by an ultrasonic homogenizer (LUH150 or the like manufactured by Yamato Scientific Co., Ltd.) having an output of 50 W over 5 minutes, then casting 0.1 mL of the slurry on an aluminum dish and drying it at 60°C, and then cutting out the aluminum dish to a size suited for testing with SEM. Adjacent particles clearly distinguishable from each other are visually selected, and the longer size of one particle is defined as the particle size. When a primary particle and a secondary particle in an aggregated state are here clearly distinguishable from each other even if present in a mixed manner, such each particle is counted as one particle and the average size in 100 of such particles randomly selected is defined as the particle size. The magnification in SEM image observation may be appropriately selected depending on the particle size of the titanium oxide, and is preferably about 20000 times. When any particle other than the titanium oxide is comprised, a particle comprising a titanium element is subjected to measurement with an energy dispersive X-ray analyzer (EMAX or the like manufactured by Horiba Ltd.) attached to SEM.

When the substrate comprises titanium oxide, the print layer is transferred to a transparent pressure-sensitive adhesive tape (309SN or the like manufactured by 3M Company) having no titanium oxide and no inorganic pigment, and such an ash sample is produced. Specifically, a tape press-bonding roller (No349 or the like manufactured by Yasuda Seiki Seisakusho, Ltd.) having a roller mass of 2 kg is used to attach the pressure-sensitive adhesive tape to an upper layer of the print layer. Thereafter, such a pressure-sensitive adhesive tape comprising the print layer is immersed in a copper ethylenediamine solution (manufactured by Merck Millipore Corporation or the like) for cellulose viscosity measurement for 24 hours, and then well washed with ion-exchange water. The moisture on the resulting pressure-sensitive adhesive tape comprising the print layer is wiped off, and the tape is dried with a drying machine at 60°C for 1 hour. Thereafter, ash for use in particle size measurement is produced by burning with a muffle furnace at 525°C, and the particle size is measured according to the same method as described above.

The average particle size of a titanium oxide particle for use as a raw material can be determined as a median size measured with a laser diffraction/scattering type particle size distribution meter (LA-300 or the like manufactured by Horiba Ltd.). Measurement conditions are preferably the following conditions. The average particle size determined with the laser diffraction/scattering type particle size distribution meter may differ from the particle size calculated based on a scanning-type electron microscope photograph, by about ±50%.
Dispersion medium: ion-exchange water,
Refractive index of particle measured: 2.75-0.01 i,
Refractive index of solvent: 1.333,
Irradiation with built-in ultrasound (30 W): 3 minutes,
Rate of circulation: 3

When the titanium oxide is acicular, the longer size of the titanium oxide is not particularly limited, and is preferably 0.1 µm or more and 50.0 µm or less, more preferably 0.5 µm or more, further preferably 1.5 µm or more, and more preferably 30.0 µm or less, further preferably 15.0 µm or less from the viewpoint of providing a sheet medium excellent in surface smoothness. The shorter size is preferably 0.01 µm or more and 3.0 µm or less, more preferably 0.03 µm or more, further preferably 0.05 µm or more, and more preferably 1.5 µm or less, further preferably 1.0 µm or less. When the titanium oxide is acicular, the aspect ratio (longer size/shorter size) is preferably 5 or more and 300 or less, more preferably 10 or more, further preferably 15 or more, and more preferably 100 or less, further preferably 30 or less.

The longer size and the shorter size of the titanium oxide comprised in the print layer can be measured from a SEM image of ash obtained by burning of the medium for printing or print product in a muffle furnace and treated in the same manner as described above, the image being obtained with a scanning-type electron microscope (SEM, S5200 or the like manufactured by Hitachi High-Tech Corporation). A powder to be tested with the scanning-type electron microscope is obtained by the same method as described above.

The longer size and the shorter size of the titanium oxide for use as a raw material can also be measured from a SEM image obtained with the scanning-type electron microscope.

When the substrate comprises titanium oxide, the print layer is transferred to a transparent pressure-sensitive adhesive tape (309SN or the like manufactured by 3M Company) having no titanium oxide and no inorganic pigment, and such an ash sample is produced. Specifically, a tape press-bonding roller (No349 or the like manufactured by Yasuda Seiki Seisakusho, Ltd.) having a roller mass of 2 kg is used to attach the pressure-sensitive adhesive tape to an upper layer of the print layer. Thereafter, such a pressure-sensitive adhesive tape comprising the print layer is immersed in a copper ethylenediamine solution (manufactured by Merck Millipore Corporation or the like) for cellulose viscosity measurement for 24 hours, and then well washed with ion-exchange water. The moisture on the resulting pressure-sensitive adhesive tape comprising the print layer is wiped off, and the tape is dried with a drying machine at 60°C for 1 hour. Thereafter, ash for use in particle size measurement is produced by burning with a muffle furnace at 525°C, and the longer size and the shorter size are measured according to the same method as described above.

The particle size, the longer size and the shorter size of the titanium oxide are measured by methods described in Examples. The values of the particle size, the longer size and the shorter size of the titanium oxide used as a raw material may also be adopted.

### (Thermoplastic resin)

The thermoplastic resin for use in the print layer serves as a binder.

The thermoplastic resin in the print layer is not particularly limited, and when the print layer is provided by coating, the thermoplastic resin is preferably a water-dilutable thermoplastic resin from the viewpoint that coating with the resin in the form of an aqueous coating liquid is preferable.

Examples of the water-dilutable resin include water-soluble, emulsion-type, and dispersion-type resins.

The water-dilutable thermoplastic resin may be any of a natural resin and a synthetic resin, and examples include a starch derivative, casein, shellac, polyvinyl alcohol and its derivative, an acrylic resin, a maleic acid-based resin, a urethane-based resin, a polyester-based resin, a styrene-butadiene-based resin, a vinyl chloride-based resin, and a polyolefin-based resin.

More specific examples of the acrylic resin include an acrylic resin obtained by copolymerization of (meth)acrylic acid and an alkyl ester thereof, styrene or the like, as monomer components, an ethylene-(meth)acrylic acid copolymer, and a styrene-acrylic acid-maleic acid resin. Examples of the maleic acid-based resin include a styrene-maleic acid resin.

Among them, at least one selected from the group consisting of a starch derivative, casein, shellac, polyvinyl alcohol and its derivative, an acrylic resin, a styrene-butadiene-based resin, and a maleic acid-based resin is preferable, at least one selected from the group consisting of a starch derivative, polyvinyl alcohol, a polyvinyl alcohol derivative, an acrylic resin, a styrene-butadiene-based resin, and a maleic acid-based resin is more preferable, at least one selected from the group consisting of a starch derivative, polyvinyl alcohol, a polyvinyl alcohol derivative, an acrylic resin, and a styrene-butadiene-based resin is further preferable, and at least one selected from the group consisting of polyvinyl alcohol, a polyvinyl alcohol derivative, an acrylic resin, and a styrene-butadiene-based resin is still more preferable, from the viewpoints of stability of the coating liquid and solvent resistance of the coating layer.

These resins may be used singly or in combinations of two or more kinds thereof.

When an organic solvent-based coating liquid is formed, a known thermoplastic resin such as a cellulose-based resin, a polyurethane-based resin, an acrylic resin, or a vinyl chloride-copolymerized resin is preferably used.

The content of the thermoplastic resin is not particularly limited, and may be appropriately selected depending on the type of the thermoplastic resin, the contents of the titanium oxide in the coating liquid, and an inorganic pigment described below, and the like, and the content in the solid content of the coating liquid is, for example, preferably 5% by mass or more and 99% by mass or less, more preferably 10% by mass or more, further preferably 15% by mass or more, and more preferably 98% by mass or less.

The coating liquid is preferably an aqueous coating liquid, and examples of the aqueous medium here used include water or a mixture of water and a water-miscible solvent.

Examples of the water-miscible solvent include lower alcohols, polyhydric alcohols, and alkyl ethers or alkyl esters thereof. Specific examples include lower alcohols such as methyl alcohol, ethyl alcohol, n-propyl alcohol, and isopropyl alcohol, polyhydric alcohols such as ethylene glycol, propylene glycol, diethylene glycol, dipropylene glycol, and glycerin, as well as ethylene glycol monomethyl ether, ethylene glycol monoethyl ether, ethylene glycol monoacetate, propylene glycol monomethyl ether, propylene glycol monoethyl ether, propylene glycol monoacetate, diethylene glycol monomethyl ether, and dipropylene glycol monomethyl ether.

When an organic solvent-based coating liquid is formed, examples of the organic solvent include known solvents, for example, aromatic organic solvents such as toluene and xylene, ester-based organic solvents such as ethyl acetate, n-propyl acetate and isobutyl acetate, ketone-based organic solvents such as methyl ethyl ketone and methyl isobutyl ketone, alcohol-based organic solvents such as methanol, ethanol, isopropanol and n-butanol, and hydrocarbon-based solvents such as methylcyclohexanone.

The solid content concentration in the coating liquid is not particularly limited, and is preferably 10% by mass or more and 80% by mass or less, more preferably 20% by mass or more, further preferably 30% by mass or more, and more preferably 70% by mass or less, further preferably 65% by mass or less from the viewpoint of providing a desired thickness of the coating layer, from the viewpoint of allowing the coating liquid to have a viscosity facilitating coating, and from the viewpoint of ease of drying.

When the print layer is the laminate layer, a film comprising titanium oxide is preferably stacked on the substrate.

The thermoplastic resin constituting the laminate layer is not particularly limited as long as it can allow the titanium oxide to be included and processed into a film form, and may be appropriately selected from the group consisting of known thermoplastic resins. Specific examples thereof include polyester-based resins such as polyethylene terephthalate, polybutylene terephthalate, and polyethylene naphthalate, polyvinyl chloride, polyvinylidene chloride, polybutene, polybutadiene, an ethylene-vinyl acetate copolymer, polyolefin-based resins such as polyethylene, polypropylene, an ethylene-propylene copolymer, and polymethylpentene; polycarbonate; polyurethane; polyamide; polyacrylonitrile; and poly(meth)acrylate.

In particular, the resin constituting the laminate layer preferably comprises polyolefin such as polyethylene, polypropylene, or an ethylene-propylene copolymer, or polyester such as polyethylene terephthalate, polybutylene terephthalate, polylactic acid, or polybutylene succinate, more preferably comprises at least one selected from the group consisting of polyethylene, polypropylene, an ethylene-propylene copolymer, polyethylene terephthalate, polylactic acid, and polybutylene succinate, and is further preferably at least one selected from the group consisting of polyethylene, polypropylene, an ethylene-propylene copolymer, polyethylene terephthalate, polylactic acid, and polybutylene succinate from the viewpoints of being able to be used for a general purpose, of being high in transmittance of ultraviolet light, and of allowing for discoloration of the titanium oxide also inside the laminate layer. The resin constituting the laminate layer is still more preferably polyolefin, still more preferably at least one selected from the group consisting of polyethylene and polypropylene. Polyethylene (PE) is roughly classified into linear low-density polyethylene (LLDPE), low-density polyethylene (LDPE), medium-density polyethylene (MDPE), and high-density polyethylene (HDPE). Among them, low-density polyethylene (LDPE) is preferable because of being excellent in extrusion lamination properties.

Herein, polyester as a biodegradable resin is preferably used as the resin constituting the laminate layer in that the environmental burden is reduced, and examples thereof include polylactic acid and polybutylene succinate.

These resins may be used singly or in combinations of two or more kinds thereof.

The content of the thermoplastic resin in the laminate layer is preferably 20.0% by mass or more and 99.9% by mass or less, more preferably 30.0% by mass or more, further preferably 50.0% by mass or more, still more preferably 70.0% by mass or more, and more preferably 99.5% by mass or less, further preferably 99.0% by mass or less from the viewpoint of suppression of smoking in ultraviolet laser irradiation.

The print layer may comprise any other component, in addition to the above titanium oxide and thermoplastic resin.

Examples of such any other component include an inorganic pigment other than the titanium oxide. Examples of the inorganic pigment include kaolin, talc, calcium carbonate, calcium sulfite, gypsum, fired kaolin, white carbon, amorphous silica, delaminated kaolin, diatomaceous earth, magnesium carbonate, aluminum hydroxide, calcium hydroxide, magnesium hydroxide, zinc oxide, and zinc hydroxide, and among them, kaolin and calcium carbonate are preferable from the viewpoint of suppression of smoking in ultraviolet laser irradiation and from the viewpoint of availability.

The calcium carbonate may be heavy calcium carbonate or light calcium carbonate without particular limitation, and is preferably heavy calcium carbonate.

The inorganic pigment other than the titanium oxide is preferably comprised because not only titanium oxide scattering in ultraviolet laser irradiation is suppressed and smoking is suppressed, but also a print product high in print density is obtained.

The shape of the inorganic pigment is not particularly limited, and may be any of, for example, irregular, spherical, rod, and acicular shapes.

When the print layer comprises the inorganic pigment, the content of the inorganic pigment in the print layer is preferably 5% by mass or more and 90% by mass or less, more preferably 10% by mass or more, further preferably 30% by mass or more, and more preferably 85% by mass or less, further preferably 80% by mass or less from the viewpoint of suppression of smoking and from the viewpoint of providing a print product high in print density.

Such an inorganic pigment except for the titanium oxide may be used singly or in combinations of two or more kinds thereof. When two or more such inorganic pigments are used in combination, the total of such inorganic pigments except for the titanium oxide is preferably the above content.

Any other component may be additionally added, in addition to the above components, to the print layer in the medium for printing of the present embodiment as long as the effects of the present invention are not impaired, and examples thereof include an antistatic agent, an anti-blocking agent, an antioxidant, a defoamer, a film-forming agent, a pigment dispersant, and a viscosity modifier.

### [Coating liquid]

When the print layer is provided by coating, the coating liquid is obtained by mixing the above materials with the aqueous medium. Here, the titanium oxide, the thermoplastic resin, water, and, if necessary, a water-miscible solvent, a pigment dispersant, a pigment-dispersing resin and/or the like may be mixed and kneaded and furthermore water and, if necessary, the water-miscible solvent and the balance of any predetermined material may be added and mixed, prior to mixing with the aqueous medium.

The coating liquid is obtained by mixing and dispersing the respective components by a high-speed stirrer such as a homomixer or a laboratory mixer and/or a disperser such as a triple roll mill or a bead mill.

### [Laminate layer (film)]

The film for forming the laminate layer is obtained by preparing a raw material composition in which materials, for example, at least the titanium oxide and the thermoplastic resin, and, if necessary, the inorganic pigment are molten and kneaded, and forming the composition into a film form and, if necessary, stretching such a film.

When the raw material composition is prepared, a masterbatch comprising the titanium oxide and the inorganic pigment at high concentrations may be prepared and then mixed with the resin.

The materials uniformly mixed in advance may be charged into a forming machine, or the materials may be mixed in a hopper or kneader integrated with a forming machine.

The method for forming the composition into a film form may be appropriately selected from the group consisting of conventionally known methods, and may be appropriately selected from the group consisting of, for example, a melt extrusion method, a melt casting method, and a calender method.

The substrate and the film may be attached with an adhesive layer being interposed, or are preferably laminated.

The adhesive layer is not particularly limited, and may be appropriately selected from the group consisting of known adhesive layers and then used. Specifically, a pressure-sensitive adhesive layer of JP 2012-57112 A is exemplified.

Specific examples of lamination include stacking of the paper substrate and the laminate layer by a thermal lamination method, a dry lamination method, a wet lamination method, an extrusion lamination method, or the like.

In particular, an extrusion lamination method is preferable in terms of a production step because no step of attaching the laminate layer and the paper substrate is required.

### <Resin layer>

The medium for printing of the present embodiment may comprise a resin layer on the substrate layer and the print layer from the viewpoint of enhancements in waterproof properties and antifouling properties, and preferably comprises a resin layer from the viewpoint of an enhancement in print density when the print layer is the coating layer. In this case, the medium has the configuration of Fig. 2 described above. The titanium oxide content in the resin layer is preferably less than 0.04 g/m² from the viewpoint of penetration of ultraviolet laser.

The thermoplastic resin for use in the resin layer is not particularly limited as long as it can be laminated on the print layer, and may be appropriately selected from the group consisting of known thermoplastic resins.

Specific examples include polyester-based resins such as polyethylene terephthalate, polybutylene terephthalate, polyethylene naphthalate, polylactic acid, and polybutylene succinate, polyvinyl chloride, polyvinylidene chloride, polyolefin-based resins such as polybutene, polybutadiene, an ethylene-vinyl acetate copolymer, polyethylene, polypropylene, an ethylene-propylene copolymer, and polymethylpentene; polycarbonate; polyurethane; polyamide; polyacrylonitrile; and poly(meth)acrylate, and in particular, polyolefins such as polyethylene, polypropylene, and an ethylene-propylene copolymer, and polyesters such as polyethylene terephthalate, polybutylene terephthalate, polyethylene naphthalate, polylactic acid, and polybutylene succinate are preferable, polyethylene, polypropylene, polyethylene terephthalate, polylactic acid, and polybutylene succinate are more preferable, polyethylene and polypropylene are further preferable, and polyethylene is still further preferable.

Not only the above materials, but also a biomass resin and/or a biodegradable resin may also be used as the resin.

These resins may be used singly or in combinations of two or more kinds thereof.

Among the above thermoplastic resins, polyethylene is preferable because of being excellent in extrusion lamination properties and barrier properties.

Polyethylene (PE) is roughly classified into linear low-density polyethylene (LLDPE), low-density polyethylene (LDPE), medium-density polyethylene (MDPE), and high-density polyethylene (HDPE). Among them, low-density polyethylene (LDPE) is preferable because of being excellent in extrusion lamination properties.

The laminate layer may be produced by a conventionally known production method appropriately selected, and such a method may be appropriately selected from the group consisting of a melt extrusion method, a melt casting method, a calender method, and the like.

The total light transmittance of the resin layer is preferably 40% or more, more preferably 60% or more, further preferably 80% or more, still more preferably 90% or more, and 100% or less. The upper limit is not particularly limited.

The total light transmittance is measured according to JIS K 7361-1:1997.

The thickness of the resin layer is not particularly limited, and is preferably 5 µm or more and 300 µm or less, more preferably 10 µm or more, further preferably 15 µm or more, and more preferably 100 µm or less, further preferably 50 µm or less from the viewpoint of achievement of a clear print image and from the viewpoint of handleability of the medium for printing and the print product.

### [Print product and method for producing print product]

A method for producing a print product of the present embodiment comprises a step of printing by irradiation of the medium for ultraviolet laser printing with ultraviolet laser and thus discoloration of an irradiated region.

A print product of the present embodiment is a print product obtained from the above film for ultraviolet laser printing, having a printed region comprising discolored titanium oxide in at least one portion thereof. A ratio of a Raman intensity assigned to titanium oxide in the printed region to a Raman intensity assigned to titanium oxide in a non-printed region is preferably 0.70 or less. The printed region comprising discolored titanium oxide is a region comprising titanium oxide discolored by irradiation with ultraviolet laser, and is an irradiated region with ultraviolet laser, namely, a printed region.

Examples of the medium for printing, for use in the method for producing a print product of the present embodiment, include the above medium for printing, and also preferable ranges thereof are the same as in the above medium for printing. In the method for producing a print product of the present embodiment, at least an irradiated region with ultraviolet laser may comprise the print layer on the paper substrate, and no print layer may be provided in a region where no printing is to be made.

The irradiation with ultraviolet laser is preferably made so that the ratio between the Raman intensity assigned to titanium oxide in the printed region and the Raman intensity assigned to titanium oxide in the non-printed region is 0.70 or less. In other words, the ratio of the Raman intensity assigned to titanium oxide in the printed region to the Raman intensity assigned to titanium oxide in the non-printed region in the print product of the present embodiment is preferably 0.70 or less.

The printed region in the first print product of the present invention means a region (portion) comprising discolored titanium oxide in a printable region, and is preferably a region (portion) where printing with ultraviolet laser is applied. The non-printed region means a region (portion) where no printing is applied in a printable region. The printable region means the entire region comprising titanium oxide, obtained by combining a region in which printing by ultraviolet laser can be made and a printed region, if present, which is obtained by printing with ultraviolet laser in the medium for ultraviolet laser printing or print product, and the non-printable region means a region other than the printable region in the medium for ultraviolet laser printing or print product.

It is preferable to make printing so that the ratio between the Raman intensity assigned to titanium oxide in the printed region and the Raman intensity assigned to titanium oxide in the non-printed region (Raman intensity in printed region/Raman intensity in non-printed region) is 0.70 or less. The Raman intensity ratio falls within the range to thereby allow a print product excellent in viewability to be obtained.

The Raman intensity ratio (Raman intensity in printed region/Raman intensity in non-printed region) is as follows. When the titanium oxide used is rutile-type titanium oxide, the Raman intensity assigned to the titanium oxide is contrasted with the Raman intensity at the maximum value in the wavenumber range of 447 ± 10 cm⁻¹. When the titanium oxide used is anatase-type titanium oxide, the Raman intensity assigned to the titanium oxide is contrasted with the Raman intensity at the maximum value in the wavenumber range of 516 ± 10 cm⁻¹.

When rutile-type titanium oxide and anatase-type titanium oxide co-exist, the Raman intensity assigned to the rutile-type titanium oxide is contrasted.

It is preferable in the print product of the present embodiment that the non-printed region be white and the printed region be black.

The non-printed region preferably has a color value of 10 in the Munsell color system, namely, is white. On the other hand, the printed region preferably has a color value of any of 0 to 8, more preferably 0 to 6, further preferably 0 to 4 in the Munsell color system.

It is preferable for providing the above color in the Munsell color system to appropriately adjust the thickness of the print layer in the medium for printing, properties such as the titanium oxide content, and conditions of irradiation with ultraviolet laser (for example, average output, repeat frequency, and wavelength).

### <Conditions of irradiation with ultraviolet laser>

The wavelength of ultraviolet laser is preferably 260 nm or more and 370 nm or less, more preferably 365 nm or less, further preferably 360 nm or less, and more preferably 340 nm or more, further preferably 350 nm or more from the viewpoint of an enhancement in viewability of the printed region.

The average output of ultraviolet laser is preferably 0.3 W or more and 30 W or less, more preferably 0.8 W or more, further preferably 1.2 W or more, still more preferably 1.8 W or more, and more preferably 25 W or less, further preferably 20 W or less, still more preferably 15 W or less, still more preferably 10 W or less, still more preferably 6 W or less from the viewpoint of an enhancement in viewability of the printed region and from the viewpoint of economic performance.

The repeat frequency (frequency) of ultraviolet laser is preferably 10 kHz or more and 100 kHz or less, more preferably 20 kHz or more, further preferably 30 kHz or more, and more preferably 80 kHz or less, further preferably 60 kHz or less from the viewpoint of an enhancement in viewability of the printed region.

The spot size of ultraviolet laser is preferably 10 µm or more and 300 µm or less, more preferably 20 µm or more, further preferably 30 µm or more, and more preferably 240 µm or less, further preferably 180 µm or less, further preferably 120 µm or less from the viewpoint of achievement of a clear image and from the viewpoint of ease of printing.

The scanning speed of ultraviolet laser is preferably 500 mm/sec or more and 7000 mm/sec or less, more preferably 1000 mm/sec or more, further preferably 2000 mm/sec or more, and more preferably 6000 mm/sec or less, further preferably 5000 mm/sec or less from the viewpoints of high-speed printing and of viewability of the printed region.

The line pitch of ultraviolet laser is preferably 10 µm or more and 300 µm or less, more preferably 20 µm or more, further preferably 30 µm or more, and more preferably 250 µm or less, further preferably 200 µm or less from the viewpoint of achievement of a clear image and from the viewpoint of availability of an apparatus.

### <Aspects of method for producing print product>

The method for producing a print product of the present embodiment can be performed in various aspects.

Hereinafter, various aspects where the method for producing a print product of the present embodiment can be applied are exemplified, but the method for producing a print product of the present embodiment is not limited to the following aspects. The information to be printed is not particularly limited, and is preferably variable information.

The method for producing a print product of the present embodiment is preferably performed in an in-line manner.

### (1) Direct printing onto package

A first embodiment of the method for producing a print product of the present embodiment relates to a method for printing information onto a package comprising the medium for printing of the present embodiment, and the method comprises a step of performing direct printing onto the package being moved on a packaging line or being intermittently stopped, with ultraviolet laser.

In the method for producing a print product of the first embodiment, a predetermined amount of titanium oxide is comprised and the package is produced by the medium for printing of the present embodiment, and direct printing is applied with ultraviolet laser. At least the outermost layer of the package may be produced from the medium for printing of the present embodiment.

The package is, for example, a container for foods, and it is preferable to perform direct printing onto a side surface or a rear surface of the package with ultraviolet laser.

### (2) Printing onto label

A second embodiment of the method for producing a print product of the present embodiment relates to a method for printing information onto a label comprising the medium for printing of the present embodiment. A medium for printing, constituting a printing surface of the label, may be produced from the medium for printing of the present embodiment.

The label onto which printing is applied is preferably attached to the package by use of a label attachment apparatus. The label attachment apparatus is any of various label attachment apparatuses proposed.

In a first label attachment apparatus, an adhesive is provided to label sheet wound in a roll shape, and then attached to an article. More specifically, there is exemplified a roll labeler comprising a cutting tool which cuts label sheet wound in a roll shape, to a predetermined length, every one sheet, a pasting conveyance tool which receives the label sheet cut by the cutting tool, by a label sheet support coated with an adhesive, and allows the adhesive to adhere to a rear surface of the label sheet, and a pasting/attaching tool which receives the label sheet (label) to which the adhesive is provided, from the pasting conveyance tool, and attaches it to an article such as a container, wherein a rotation conveyance tool having a label supporting surface on an outer surface is provided between the cutting tool and the pasting conveyance tool. The roll labeler is exemplified in JP H6-64637 A.

There are also exemplified an aspect of a roll labeler comprising a cutting tool which cuts label sheet wound in a roll shape, to a predetermined length, every one sheet, a delivery roll that delivers the label sheet to an attachment roll, and a pasting roll that imparts a paste to the label sheet retained by the attachment roll, and such an aspect where the delivery roll is not required.

It is preferable to perform irradiation with ultraviolet laser before or after cutting of label sheet wound in a roll shape, to a predetermined length, and before delivery to the next roll or the like. A front surface or a rear surface of the label sheet wound in a roll shape corresponds to a front surface or a rear surface in attachment to the package, depending on the aspect of the roll labeler, and thus irradiation with ultraviolet laser is performed depending on the aspect.

In a second label attachment apparatus, a pressure-sensitive label roll is used as a label.

In the case of use of a release paper-attached pressure-sensitive label roll, there is exemplified, for example, an attachment apparatus comprising a release paper separation tool which separates a pressure-sensitive label and release paper, a delivery roll which receives the pressure-sensitive label from which the release paper is separated, and an attachment roll which draws the pressure-sensitive label from the delivery roll and attaches the label to an article (package). It is preferable to perform irradiation with ultraviolet laser before separation of the release paper or after separation of the release paper and before supporting by the attachment roll.

There is also exemplified an apparatus comprising a mechanism which mounts a release paper-attached pressure-sensitive label roll and separates a pressure-sensitive label and release paper, and a mechanism which attaches the label immediately after separation, wherein printing is applied by ultraviolet laser in the lead up to separation of the release paper from the pressure-sensitive label roll mounted. The above method for attaching the pressure-sensitive label is also referred to as "unidirectional installation."

There is further exemplified a label attachment apparatus comprising a mechanism which mounts a release paper-attached pressure-sensitive label roll and separates release paper from a pressure-sensitive label, and a mechanism which attaches the pressure-sensitive label to an article (package), wherein the mechanism for attachment is a cylinder system, an air-jet system, or a robot arm system. It is preferable to perform irradiation with ultraviolet laser in the lead up to separation of the release paper from the release paper-attached pressure-sensitive label roll mounted.

The label here used may be a liner-less pressure-sensitive label. The liner-less pressure-sensitive label is a label with no release paper, and is characterized by being inexpensive because the number of labels per roll is large and no release paper is present as compared with the case of use of the release paper-attached pressure-sensitive label roll.

Such a label attachment apparatus using the liner-less pressure-sensitive label is, for example, an apparatus comprising a mechanism which mounts a liner-less label roll, a cutting mechanism which cuts a liner-less label every one label, and an attachment mechanism which attaches the liner-less label cut, to an article (package), wherein the attachment mechanism is a cylinder system or a robot arm system. It is preferable to perform printing by irradiation with ultraviolet laser between the mechanism which mounts a liner-less label roll and the cutting mechanism, or in the lead up to sending of the liner-less label cut, to the attachment mechanism.

In a third label attachment apparatus, a medium for printing of the present embodiment is attached to an article (package) and then printing with ultraviolet laser is performed.

The label attachment method is performed with reference to the above first apparatus and second apparatus.

### (3) Printing onto pressure-sensitive adhesive tape

A third embodiment of the method for producing a print product of the present embodiment is an aspect where the medium for printing of the present embodiment is a pressure-sensitive adhesive tape.

In other words, the method for producing a print product of the third embodiment comprises a step of attaching a pressure-sensitive adhesive tape produced from the medium for printing of the present embodiment, to an article (package), and a step of performing printing with ultraviolet laser before the attachment step or after the attachment step.

A printing apparatus may also be used in which a printing apparatus with ultraviolet laser is incorporated into a cardboard sealing machine. Specifically, the apparatus comprises a mechanism which provides winding of a pressure-sensitive adhesive tape, a mechanism comprising a conveyor for conveying a cardboard, which folds a flap of a cardboard, and a mechanism which attaches the pressure-sensitive adhesive tape and seals the cardboard, and also comprises a mechanism which performs printing onto the pressure-sensitive adhesive tape with ultraviolet laser during or after attachment of the pressure-sensitive adhesive tape.

The print product and the method for producing a print product of the present embodiment are not limited to the above aspects, and can be applied to various applications where printing is demanded.

### <Processed article with medium for printing and print product>

The medium for ultraviolet laser printing of the present embodiment can be irradiated with ultraviolet laser to allow printing onto the medium, and can be used in various applications.

The medium for ultraviolet laser printing and the print product obtained by applying printing with ultraviolet laser to the medium for printing, of the present embodiment, are processed into various processed articles and used.

A processed article obtained with the medium for ultraviolet laser printing and the print product obtained by applying printing with ultraviolet laser to the medium for printing, of the present embodiment, is, for example, a package, a label, or a pressure-sensitive adhesive tape. The medium for printing and the print product of the present embodiment are also preferably directly formed into a package by forming and used.

Examples of the package include a packaging box; a liquid container for beverages (preferably a liquid paper container for beverages), such as a milk pack and a paper cup; a container for foods, such as a food tray, a food cup (bowl-shaped), and a skin pack, examples of the label include a label sheet, a pressure-sensitive adhesive label, and a pressure-sensitive adhesive sheet, and examples of the pressure-sensitive adhesive tape include a pressure-sensitive adhesive tape and a kraft tape.

A package surface can be irradiated with ultraviolet laser to allow for printing of, for example, not only a date and a bar code, but also a variety of information on contents (contents, raw material names, amounts of contents, and maker name).

### Examples

Hereinafter, characteristics of the present invention are further specifically described with reference to Examples and Comparative Examples. Materials, amounts of use, proportions, treatment details, treatment procedures, and the like shown in the following Examples can be appropriately modified without departing from the gist of the present invention. Accordingly, the scope of the present invention should not be construed to be limited to specific examples shown below. In the following Examples, "%" and "part(s)" mean "% by mass" and "part(s) by mass" respectively, unless particularly noted.

### [Example 1]

### (Method for producing masterbatch)

A masterbatch was produced by the following procedure according to JP 2015-96568 A.

A masterbatch was obtained by mixing 60 parts of a PE resin (polyethylene resin (LDPE), LC522 manufactured by Japan Polyethylene Corporation) and 40 parts of titanium oxide (trade name R-780, manufactured by Ishihara Sangyo Kaisha, Ltd., rutile-type titanium oxide, irregular, average particle size 0.24 µm (catalogue value)) by a tumbler mixer (TM-65S manufactured by Eishin Co., Ltd.) in conditions of 45 rpm and 1 hour, melting and kneading the mixture by a twin-screw extruder (TEX30XCT manufactured by Japan Steel Works, Ltd., L/D = 42) in conditions of a speed of screw rotation of 250 rpm and a cylinder temperature of 200°C, extruding the mixture to thereby provide a strand, and cooling the strand in a water tank and then forming the strand into a pellet having a column shape having an average axis size of 2.0 mm and an average axis length of 3.0 mm by use of a pelletizer.

### (Provision of laminate layer (film))

The masterbatch and the PE resin were loaded into a single-screw extruder (50C150 manufactured by Toyo Seiki Seisaku-sho, Ltd.) so that the concentration of the titanium oxide was a value in Table 1, molten and stacked on a surface of a paper substrate (OK FRAIS Pro, manufactured by Oji Materia Co., Ltd., basis weight 310 g/m², thickness 350 µm, air permeability 47,000 seconds) so that the thickness of a laminate layer as a print layer was 20 µm, and thereafter rapidly quenched with being sandwiched by a cooling roll at a temperature regulated at 20°C, and thus a medium for printing, comprising a laminate layer as a print layer, was obtained. The melting temperature was set to 320°C.

### [Example 2]

A medium for printing was obtained in the same manner as in Example 1 except that the substrate was modified to OK Ball (manufactured by Oji Materia Co., Ltd., basis weight 310 g/m², thickness 386 µm, air permeability 13,500 seconds) and a film resin layer was provided onto a surface of the substrate, the surface facing a coating layer.

### [Example 3]

A medium for printing was obtained in the same manner as in Example 1 except that the following white paperboard was used as the substrate.

### (Method for producing white paperboard)

A pulp slurry was obtained by mixing and beating 15 parts of NBKP (needle bleached kraft pulp) and 85 parts of LBKP (leaf bleached kraft pulp) so that the disintegration freeness (CSF: Canadian standard freeness) was 500 mL. To 100 parts of the pulp slurry obtained were added 0.55 parts (in terms of solid content) of an amphoteric polyacrylamide-based paper strengthening agent (Polystrone PS1260 manufactured by Arakawa Chemical Industries Ltd.) as a paper strengthening agent for filling, 1.45 parts (in terms of solid content) of a rosin sizing agent (Sizepine N-771 manufactured by Arakawa Chemical Industries Ltd.) as a sizing agent for filling, and 2.5 parts (in terms of solid content) of aluminum sulfate, and paper materials for five layers of a front layer, a front underlayer, a medium layer, a rear underlayer, and a rear layer were prepared. The paper materials were used to make paper with a twin wire paper machine for making paper of five layers at a basis weight set to 60 g/m² with respect to all the five layers. In a papermaking step, 0.7 g/m² of polyvinyl alcohol was applied by a size press, and a smoothing treatment with a calender was performed to provide a white paperboard having a basis weight of 300 g/m², a paper thickness of 357 µm, a density of 0.84 g/cm³, and an air permeability of 400 seconds.

### [Examples 4 to 6]

Each medium for printing was obtained in the same manner as in Example 2 except that the titanium oxide concentration was modified as shown in the Table.

### [Examples 7 to 9]

Each medium for printing was obtained in the same manner as in Example 5 except that the thickness of the print layer was modified as shown in the Table.

### [Example 10]

### (Method for preparing coating material)

A pigment dispersion was produced by use of a Cowles dissolver by mixing 60 parts of titanium oxide and 40 parts of ion-exchange water, and adding 0.08 parts of sodium polyacrylate as a dispersant. A coating liquid having a solid content concentration of 34% and a titanium oxide concentration in the solid content of 5% was prepared by mixing 18.1 parts of the pigment dispersion and 588 parts of a binder (Chemipearl S300 manufactured by Mitsui Chemicals, Inc., ethylene-methacrylic acid copolymer ionomer, solid content 35%) by use of a Cowles dissolver.

### (Coating method)

A paper substrate (manufactured by Oji Materia Co., Ltd., OK Ball, basis weight :310 g/m², thickness 386 µm, air permeability 13,500 seconds) was coated with a coating liquid prepared so that the dry mass was 17 g/m², by use of a Meyer bar, and dried at 130°C for 1 minute to provide a sheet medium.

### [Example 11]

A medium for printing was obtained in the same manner as in Example 5 except that the following resin layer was provided on the print layer.

### (Provision of resin layer)

A PE resin (polyethylene resin, LC522 manufactured by Japan Polyethylene Corporation) was loaded into a single-screw extruder (50C150 manufactured by Toyo Seiki Seisaku-sho, Ltd.), molten and stacked on the print layer so that the thickness of the resin was 20 µm, and thereafter rapidly quenched with being sandwiched by a cooling roll at a temperature regulated at 20°C, and thus a medium for printing comprising a resin layer on the print layer was obtained. The melting temperature was set to 320°C.

### [Example 12]

A medium for printing was obtained in the same manner as in Example 2 except that the resin of the print layer was modified from the PE resin to a PP resin (polypropylene resin, PH943B manufactured by SunAllomer Ltd.). The melting temperature was set to 380°C.

### [Example 13]

A medium for printing was obtained in the same manner as in Example 4 except that the following white paperboard was produced as the substrate and tested.

### (Production of white paperboard)

Base paper was obtained in the same manner as in Example 3 except that NBKP was used and adjustment was made to a basis weight of 290 g/m², a thickness of 370 µm, a density of 0.78 g/cm³, and an air permeability of 300 seconds. Next, the following coating liquid was produced, and the base paper obtained was coated with the coating liquid.

### - Production of coating liquid -

A pigment dispersion having a solid content concentration of 70% was prepared by use of a Cowles dissolver by using 40 parts of kaolin (trade name: KAOFINE, manufactured by Tiele Kaolin Company, average particle size 0.21 µm) and 60 parts of heavy calcium carbonate A (trade name: FMT65, manufactured by Fimatec Ltd., 1.65 µm) as pigments, and adding 0.25 parts of sodium polyacrylate as a dispersant, to 100 parts of the pigments. Next, a coating liquid having a solid content concentration of 62% was finally obtained by adding 4 parts of oxidized starch (trade name: Oji Ace Y, manufactured by Oji Cornstarch Co., Ltd.) and 10 parts of a styrene-butadiene copolymer latex A (trade name: S2831(J)-3, manufactured by JSR Corporation) to this pigment dispersion, in terms of solid content based on 100 parts of the pigment.

### -Coating with coating liquid-

A front surface of the base paper was coated with the coating liquid by use of a rod coater and the resultant was dried so that the dry mass was 20 g/m². A rear surface of the base paper was coated with the coating liquid by use of a blade coater and the resultant was dried so that the dry mass was 2 g/m².

The base paper on which the coating layer was provided was subjected to paper-feeding treatment with a soft calender having a metal roll surface temperature of 200°C and having 2 nips, and thus a white paperboard was obtained.

### (Provision of print layer)

A medium for printing was obtained by forming a laminate layer on a front surface of the white paperboard obtained as described above, in the same manner as in Example 4.

### [Example 14]

A medium for printing was obtained in the same manner as in Example 4 except that LBKP (leaf bleached kraft pulp) was used instead of NBKP to produce a white paperboard and the white paperboard was adopted as the substrate and tested in production of a white paperboard in Example 13.

### [Comparative Example 1]

A medium for printing was produced in the same manner as in Example 6 except that a biaxially oriented polypropylene film (Alphan, SY101, manufactured by Oji F-Tex Co., Ltd., thickness 60 µm, air permeability 99,999 seconds or more) was used as the substrate.

### [Comparative Example 2]

A medium for printing was produced in the same manner as in Example 6 except that the following paperboard was used.

### (Production of paperboard)

A paperboard (OK FRAIS Pro, manufactured by Oji Materia Co., Ltd., basis weight 310 g/m², thickness 350 µm, air permeability 47,000 seconds) was coated with an ethylene-acrylic coating liquid (Chemipearl S300 manufactured by Mitsui Chemicals, Inc.) by an air knife coater and the resultant was dried so that the amount of coating after drying was 2 g/m².

The print layer was provided on a surface of the paperboard, on which the coating layer was provided.

### [Comparative Examples 3 and 4]

Each medium for printing was obtained in the same manner as in Example 2 except that the amount of titanium oxide was modified as shown in the Table.

### [Example 15]

### (Method for preparing coating liquid)

A pigment dispersion was produced by use of a Cowles dissolver by mixing 100 parts of titanium oxide (R-780 manufactured by Ishihara Sangyo Kaisha, Ltd., rutile-type titanium oxide, average particle size :0.24 µm, irregular) as a solid content, and 50 parts of ion-exchange water, and adding 0.08 parts of sodium polyacrylate as a dispersant. A coating liquid having a solid content concentration of 45% and a titanium oxide concentration in the solid content of 50% was prepared by mixing 300 parts of the pigment dispersion and 588 parts of a binder (Chemipearl S300 manufactured by Mitsui Chemicals, Inc.) by use of a Cowles dissolver.

### (Coating method)

A paper substrate (OK FRAIS Pro, manufactured by Oji Materia Co., Ltd., basis weight 310 g/m², thickness 350 µm, air permeability 47,000 seconds) was coated with the coating liquid by use of a gravure printer and the resultant was dried so that the dry mass was 2.0 g/m², thereby forming a print layer.

### (Provision of resin layer)

A PE resin (polyethylene resin, LC522 manufactured by Japan Polyethylene Corporation) was loaded into a single-screw extruder (50C150 manufactured by Toyo Seiki Seisaku-sho, Ltd.), molten and stacked on a surface of the paper substrate, on which the print layer was provided, so that the thickness of the resin was 15 µm, and thereafter rapidly quenched with being sandwiched by a cooling roll at a temperature regulated at 20°C, and thus a sheet medium comprising a resin layer on the print layer was obtained. The melting temperature was set to 320°C.

### [Example 16]

A medium for printing was obtained in the same manner as in Example 15 except that the paper substrate was modified to OK Ball manufactured by Oji Materia Co., Ltd. (basis weight 310 g/m², thickness 386 µm, air permeability 13,500 seconds).

### [Example 17]

A medium for printing was obtained in the same manner as in Example 15 except that the paper substrate was modified to the white paperboard produced in Example 3.

### [Example 18]

A medium for printing was obtained in the same manner as in Example 16 except that a coating liquid was modified so as to have a titanium oxide concentration of 80% and a ratio of the binder of 20% in terms of solid content and the coating liquid was used for coating by an air knife coater and dried so that the dry mass was 5 g/m².

### [Example 19]

A medium for printing was obtained in the same manner as in Example 16 except that a coating liquid was modified so as to have a titanium oxide concentration of 20% and a ratio of the binder of 80% in terms of solid content and the amount of coating (dry mass) was modified to 2 g/m².

### [Example 20]

A medium for printing was obtained in the same manner as in Example 16 except that a coating liquid was modified so as to have a titanium oxide concentration of 3% and a ratio of the binder of 97% in terms of solid content and the amount of coating (dry mass) was modified to 3.3 g/m².

### [Example 21]

A medium for printing was obtained in the same manner as in Example 16 except that the thickness of the resin layer was modified to 7 µm.

### [Example 22]

A medium for printing was obtained in the same manner as in Example 16 except that the thickness of the resin layer was modified to 50 µm.

### [Example 23]

A medium for printing was obtained in the same manner as in Example 16 except that the thickness of the resin layer was modified to 300 µm.

### [Example 24]

### (Preparation of coating liquid)

A pigment dispersion was prepared by use of a Cowles dissolver by mixing 25 parts of titanium oxide (R-780 manufactured by Ishihara Sangyo Kaisha, Ltd., rutile-type titanium oxide, average particle size 0.24 µm (catalogue value), irregular) and 75 parts of calcium carbonate (FMT-90, manufactured by Fimatec Ltd., heavy calcium carbonate, average particle size 1.15 µm (catalogue value), irregular) as solid contents, and 0.08 parts of sodium polyacrylate as a dispersant, and then adjusting the solid content concentration to 55%.

Next, 16 parts of a styrene/butadiene latex (Styronal ES7902 manufactured by BASF SE) as a solid content was added to 100 parts of the pigment dispersion, and was diluted with ion-exchange water so that the solid content was 60%. Thereafter, a coating liquid comprising 20% of titanium oxide, 60% of calcium carbonate and 20% of the styrene/butadiene latex as solid contents was prepared by mixing by use of a Cowles dissolver.

### (Coating method)

A medium for printing was produced in the same manner as in Example 16 except that the dry mass was adjusted by a blade coater to be 5 g/m².

### [Example 25]

### (Preparation of coating liquid)

A coating liquid was prepared in the same manner as in Example 24 so as to comprise 2% of titanium oxide, 78% of calcium carbonate and 20% of the styrene/butadiene latex as solid contents, and a medium for printing was obtained in the same manner as in Example 16 except that coating by use of a blade coater and drying were made so that the dry mass was 20 g/m².

### [Example 26]

A medium for printing was produced in the same manner as in Example 15 except that the white paperboard of Example 13 was used as the substrate.

### [Example 27]

A medium for printing was produced in the same manner as in Example 15 except that the white paperboard of Example 14 was used as the substrate.

### [Example 28]

A coating liquid was prepared in the same manner as in Example 24 so as to comprise 5% of titanium oxide, 75% of calcium carbonate and 20% of the styrene/butadiene latex as solid contents, and a medium for printing was produced by coating the paper substrate produced in Example 3 with the coating liquid by use of a blade coater and drying the resultant so that the dry mass was 30 g/m².

Herein, no resin layer was provided on the print layer.

### [Example 29]

A medium for printing was produced in the same manner as in Example 15 except that 2.0% of titanium oxide and 98.0% of a binder (Chemipearl S300 manufactured by Mitsui Chemicals, Inc.) in terms of solid content were satisfied.

### [Comparative Example 5]

### (Film)

The substrate here used was a biaxially oriented polypropylene film (Alphan, SY101, manufactured by Oji F-Tex Co., Ltd., thickness 60 µm, air permeability 99,999 seconds or more).

### (Coating liquid)

Printing onto the film was made with a solvent-based white ink for gravure printing (Gratone PCN manufactured by Sakata Inx Corporation, titanium oxide concentration 60% in solid content), by use of a gravure roll of a plate depth of 200 µm in a gravure printer. The white ink for gravure printing was diluted with ethyl acetate so that the amount of coating after drying was 1.6 g/m² and the amount of coating with titanium oxide was 1.0 g/m².

### (Provision of resin layer)

A medium for printing was obtained by providing a resin layer in the same manner as in Example 15.

### [Comparative Example 6]

A medium for printing was obtained in the same manner as in Example 15 except that the paperboard produced in Comparative Example 2 was used.

### [Comparative Example 7]

A medium for printing was produced in the same manner as in Example 16 except that a coating liquid was modified so as to have a titanium oxide concentration of 1% and a ratio of the binder of 99% in terms of solid content.

### [Comparative Example 8]

A medium for printing was produced in the same manner as in Example 18 except that the amount of coating after drying was modified to 7 g/m².

### [Measurement and evaluation methods]

Each of the mediums for printing obtained in Examples and Comparative Examples was subjected to the following measurement and evaluation.

### <Method for measuring air permeability>

### (Production of test piece)

### 1. Case of print layer being laminate layer (film)

When the print layer was a laminate layer (film), the following treatment was performed.

An incision site for releasing was made by a cutter, and, while the incision site was pulled by hand, the print layer as the laminate layer was released from the paper substrate.

Thereafter, the paper substrate was cut out to a 60-mm square to provide a test piece.

If a paper surface was pulled by the print layer and thus broken during release of the print layer from paper, only the print layer was removed by use of a grinding apparatus (manufactured by Sagawa Manufacturing, Inc., grind stone dimension ϕ50.8 mm × 12.7 mm) and a test piece was provided by cutting-out to a 60-mm square.

### 2. Case of print layer being coating layer

When the print layer was a coating layer, the following treatment was performed.

### 2-1. Case of non-printable region comprised in medium for printing

An incision site for releasing was produced in the non-printable region by making an incision by a cutter, and, while the incision site was pulled by hand, the resin layer was released from paper.

Thereafter, a test piece was provided by cutting out to a 60-mm square.

If a paper surface was pulled by the resin layer and thus broken during release of the resin layer from paper, only the resin layer was removed by use of a grinding apparatus (manufactured by Sagawa Manufacturing, Inc., grind stone dimension ϕ50.8 mm × 12.7 mm) and a test piece was provided by cutting-out to a 60-mm square.

### 2-2. Case of no non-printable region comprised in medium for printing

An incision site for releasing was produced by making an incision by a cutter, and, while the incision site was pulled by hand, the resin layer was released from paper. Thereafter, only the print layer as the coating layer was removed by use of the grinding apparatus and a test piece was provided by cutting-out to a 60-mm square.

If a paper surface was pulled by the resin layer and thus broken during release of the resin layer from paper, the resin layer and the coating layer (print layer) were removed by use of the grinding apparatus and a test piece was provided by cutting-out to a 60-mm square.

### (Measurement of air permeability)

The air permeability was measured by the Oken type testing machine method described in JIS P 8117.
Apparatus: digital Oken type air permeability-smoothness tester (EYBO manufactured by Asahi Seiko Co., Ltd.)
Nozzle: for measurement of high air permeability

Five positions randomly selected was subjected to measurement, and the average value of five times was determined as the measurement value.

The air permeability of the substrate was measured on a surface of the substrate, on which the print layer had been provided.

### <Measurement of length-weighted average fiber length>

The length-weighted average fiber length of the pulp constituting the paper substrate was measured by the following method.

Each of the media for printing obtained in Examples and Comparative Examples was cut out, and the resultant was immersed in ion-exchange water, subjected to adjustment to a concentration of 2%, and then immersed for 24 hours.

After immersion for 24 hours, a standard defibrator (manufactured by Kumagai Riki Kogyo Co., Ltd.) was used for treatment until any undefibrated fiber disappeared, and thus the pulp was defibrated to provide a fiber. When a resin layer was comprised, a slurry (pulp fiber dispersion) after removal of the resin layer and defibration was separately taken, and a fiber length measurement machine (Model FS-5 provided with UHD base unit, manufactured by Valmet K.K.) was used to measure "length-weighted average fiber length (ISO)."

The "length-weighted average fiber length (ISO)" is the length-weighted average fiber length obtained by selection of a fiber of 0.2 mm or more and 7.6 mm or less and calculation.

### <Thicknesses of print layer and resin layer>

The thicknesses of the print layer and the resin layer were measured from the image data obtained from a scanning-type electron microscope.

### (1) Production of measurement sample

A sample was embedded in a photo-curable resin (D-800 manufactured by Toagosei Co., Ltd.), and a cross section of the medium for printing was exposed by an ultramicrotome. Grinding was performed at ordinary temperature by use of a diamond knife.

The cross section ground was subjected to gold deposition at a thickness of about 20 nm, and subjected to measurement with a scanning-type electron microscope.

### (2) Measurement apparatus/conditions

Measurement apparatus: S-3600 (manufactured by Hitachi High-Technologies Corporation)
Measurement conditions: magnification of 2000x,
The type of the scanning-type microscope was not limited to the above, and an apparatus displaying the scale bar was used.

If the print layer or the resin layer was thin, an appropriate magnification was selected and image data was acquired.

### (3) Measurement method

An energy dispersive X-ray spectroscopy apparatus attached to the scanning-type electron microscope was used to confirm a titanium element comprised, from the print layer observed, and then image data was acquired at a magnification of 2000x. After the resulting image data was printed onto paper for printing, the thicknesses of the print layer and the resin layer as objects (the respective lengths between boundaries with other layers) were measured by a scale, and the actual thicknesses of the coating layer and the resin layer as compared with the scale bar were measured. Each image data was acquired at five positions randomly selected in one measurement sample, the thickness at a position where the coating layer was the thickest and that at a position where the coating layer was the thinnest were measured in the image data at one position, and the average of ten positions in total was defined as the thickness of the coating layer. The thickness at a position where the coating layer was the thickest and that at a position where the coating layer was the thinnest were measured, and the average of ten positions in total was defined as the thickness of the resin layer. The observation magnification could be herein modified depending on the thicknesses of the print layer and the resin layer observed.

### <Titanium oxide content>

### 1. Case of print layer being laminate layer (film)

### (Pre-treatment)

Pre-treatment for separation of the laminate layer as the print layer and the substrate was carried out. The printable region cut out to a proper size was immersed in a copper ethylenediamine solution (manufactured by Merck Millipore Corporation) for cellulose viscosity measurement for 3 hours, and thereafter the laminate layer was released from the paper substrate and well washed with ion-exchange water. Thereafter, the moisture on the laminate layer was wiped off, and drying with a drying machine was made at 60°C for 1 hour, to thereby obtain a laminate layer to be subjected to measurement.

The test piece cut out was cut out so that the area could be calculated, and the area calculated was applied to an expression described below.

### (Production of test piece)

The laminate layer subjected to pre-treatment was cut out to a proper size to provide a sample (test piece), and the area and the mass cut out were recorded.

### (Dissolution of test piece)

A mixed solvent of nitric acid and hydrofluoric acid at 50:5 (nitric acid:hydrofluoric acid, % by volume) and the test piece were loaded into a Teflon ^{(R)} container of an autoclave apparatus (MARS5 manufactured by CEM Japan), and treated with the autoclave at 210°C for 120 minutes, thereby dissolving the test piece. The mass of the test piece may be appropriately modified, and if the test piece remains without being dissolved, the ratio between nitric acid and hydrofluoric acid, the treatment temperature, the treatment time, and the like may be appropriately modified.

After the test piece was dissolved, the volume was precisely made constant with ultrapure water. If a non-dissolved object remains, the ratio between nitric acid and hydrofluoric acid may be modified.

### (Measurement of amount of titanium oxide in dissolution liquid)

### (1) The ICP apparatus and measurement conditions were as follows.

ICP Apparatus: ICP-OEC apparatus (CIROS1-20 manufactured by Rigaku Corporation)
Measurement conditions:
   - Carrier gas: argon gas
   - Flow rate of argon gas 0.9 L/min
   - Flow rate of plasma gas 14 L/min
   - Plasma output 1400 W
   - Speed of rotation of pump: 2
   - Measurement wavelength (Ti): 334.941 nm

### (2) Preparation of calibration curve

A universal mixed standard liquid (XSTC-622B manufactured by SPEX) was precisely weighed so that the following concentrations were each achieved, and subjected to measurement in the measurement conditions to thereby measure the strength at 334.941 nm corresponding to the emission wavelength of a titanium atom.
• Concentrations for calibration curve preparation: 0 ppm, 0.01 ppm, 0.05 ppm, 0.1 ppm, 0.5 ppm, 1.0 ppm, 3.0 ppm, 5.0 ppm

### (3) Measurement of titanium oxide content in dissolution liquid

The solution in which the test piece was dissolved was diluted with ultrapure water so as to meet the calibration curve, and subjected to ICP measurement.

### (4) Method for calculating titanium oxide content

The titanium oxide content was calculated by the following expressions. Here, the Molecular weight of titanium oxide/Molecular weight of titanium almost equals to 1.669. Titanium oxide content (g/m2) = Concentration (ppm) in ICP measurement × Dilution factor × Constant volume (L) × 1.669 × 1000/Area (m2)

### 2. Case of print layer being coating layer

### 2-1. Case of non-printable region comprised in medium for printing

### (Production of test piece)

The printable region and the non-printable region (region with no coating layer provided) of the medium for printing were each cut out to a proper size to provide a sample (test piece), and the area cut out was recorded.

### (Dissolution of test piece)

A mixed solvent of nitric acid and hydrofluoric acid at 50:5 (% by volume) and the test piece were loaded into a Teflon (R) container of an autoclave apparatus (MARS5 manufactured by CEM Japan), and treated with the autoclave at 210°C for 120 minutes, thereby dissolving the test piece. The area of the test piece may be appropriately modified, and if the test piece remains without being dissolved, the ratio between nitric acid and hydrofluoric acid, the treatment temperature, the treatment time, and the like may be appropriately modified.

After the test piece was dissolved, the volume was precisely made constant with ultrapure water.

### (Measurement of amount of titanium oxide in dissolution liquid)

### (1) The ICP apparatus and measurement conditions were as follows.

ICP Apparatus: ICP-OEC apparatus (CIROS1-20 manufactured by Rigaku Corporation)
Measurement conditions:
   - Carrier gas: argon gas
   - Flow rate of argon gas 0.9 L/min
   - Flow rate of plasma gas 14 L/min
   - Plasma output 1400 W
   - Speed of rotation of pump: 2
   - Measurement wavelength (Ti): 334.941 nm

### (2) Preparation of calibration curve

A universal mixed standard liquid (XSTC-622B manufactured by SPEX) was precisely weighed so that the following concentrations were each achieved, and subjected to measurement in the measurement conditions to thereby measure the strength at 334.941 nm corresponding to the emission wavelength of a titanium atom.
• Concentrations for calibration curve preparation: 0 ppm, 0.01 ppm, 0.05 ppm, 0.1 ppm, 0.5 ppm, 1.0 ppm, 3.0 ppm, 5.0 ppm

### (3) Measurement of titanium oxide content in dissolution liquid

The solution in which the test piece was dissolved was diluted with ultrapure water so as to meet the calibration curve, and subjected to ICP measurement.

### (4) Method for calculating titanium oxide content

The titanium oxide content was calculated by the following expression. Here, the Molecular weight of titanium oxide/Molecular weight of titanium almost equals to 1.669. Titanium oxide content (g/m2) = Concentration (ppm) in ICP measurement × Dilution factor × Constant volume (L) × 1.669 × 1000/Area (m2)

The titanium oxide content in the coating layer was determined by subtracting the titanium oxide content in the non-printable region from the titanium oxide content in the printable region.

### 2-2. Case of no non-printable region included in medium for printing

### (Production of test piece)

Two such mediums for printing were each cut out to a proper size and the area cut out was recorded.

Only a resin layer and a print layer (coating layer) were ground and removed from one of test pieces cut out, by use of a grinding apparatus (manufactured by Sagawa Manufacturing, Inc., grind stone dimension ϕ50.8 × 12.7 mm), and the resultant was adopted as a reference sample.

A cross section was appropriately observed with an electron microscope so that such grinding and removing were not so excessive.

### (Subsequent treatment)

The treatment was the same as in 2-1., and the difference in titanium oxide content between two was defined as the titanium oxide content in the coating layer.

### <Inorganic pigment content>

The inorganic pigment content was measured in the same manner as the method for measuring the titanium oxide content except that the measurement wavelength of ICP was modified to the measurement wavelength unique to a metal atom contained in each inorganic pigment. Measurement was performed at a measurement wavelength of 422.673 nm with respect to a calcium element, and at a measurement wavelength of 285.213 nm with respect to a magnesium element.

### <Smoothness after printing>

Each of the mediums for printing obtained in Examples and Comparative Examples was cut to a size of MD: 50 mm × CD: 100 mm.

A character of "2021" (font: Arial, width: 9 mm, height 3 mm) was printed (printed-out) on a surface of a sample cut, by use of an ultraviolet radiator (Model No.: MD-U1020C manufactured by Keyence Corporation).

The following conditions were used in measurement.
- Wavelength: 355 nm
- Output: 80% (2.5 W at an output of 100%)
- Frequency: 40 kHz
- Spot size: 40 µm (in focusing)
- Spot variable: 60
- Filling interval: 0.04 mm
- Scanning speed: 3000 mm/sec

A focus position of laser was adjusted by correcting the focus position of laser at the above spot variable value by use of a height correction tool attached to the apparatus.

The difference in height between the non-printed region and the printed region of the print product obtained was measured with a surface roughness meter (Model No.: VR-3000 manufactured by Keyence Corporation), and was determined according to the following criteria. The following conditions were used in measurement.
- Observation magnification: 12x
- Region definition in setting of reference surface: continuous region (extraction method: flat surface, acceptable level: 4, degree of expansion, degree of degeneracy 3)
- Correction of surface shape: removal of swell (strength of correction 5)
- Type of metering: line roughness
- Cut-off value: λs = none
- Cut-off value: λc = none

The evaluation criteria are as follows.
A: a difference in height of less than 15 µm
B: a difference in height of 15 µm or more and less than 30 µm
C: a difference in height of 30 µm or more and less than 45 µm
D: a difference in height of 45 µm or more

### <Print density>

Each of the mediums for printing obtained in Examples and Comparative Examples was cut to a size of MD: 50 mm × CD: 50 mm to provide a test piece.

The test piece was used to print a square of 10 mm × 10 mm onto a sample surface by use of an ultraviolet radiator (Model No.: MD-U1020C manufactured by Keyence Corporation).

The following conditions were used in measurement.
- Wavelength: 355 nm
- Output: 80% (2.5 W at an output of 100%)
- Frequency: 40 kHz
- Spot size: 40 µm (in focusing)
- Spot variable: 60
- Filling interval: 0.04 mm
- Scanning speed: 3000 mm/sec

A focus position of laser was adjusted by correcting the focus position of laser at the above spot variable value by use of a height correction tool attached to the apparatus.

A measurement value was defined as a value obtained by measuring the densities of the printed region and the non-printed region with respect to a square of 10 mm subjected to printing, by use of a Macbeth densitometer, and subtracting the density of the non-printed region from the density of the printed region, and was evaluated according to the following criteria.
A: a measurement value of 0.6 or more
B: a measurement value of 0.4 or more and less than 0.6
C: a measurement value of 0.25 or more and less than 0.40
D: a measurement value of less than 0.25

A measurement value of 0.6 or more means that the image density of printing (print density) is high and a print content is easily viewable, and a measurement value of 0.4 or more and less than 0.6 means that the image density of printing is slightly low, but a print content is viewable. A measurement value of 0.25 or more and less than 0.40 means that the image density of printing is low, but a print content is scarcely viewable, and a measurement value of less than 0.25 means that the image density of printing is so low that a print content is not viewable.

### <Amount of smoking>

The amount of smoking during printing of a square of 10 mm × 10 mm onto a sample surface by ultraviolet laser irradiation in evaluation of the print density was evaluated by the following method.

### (Determination criteria)

A: no visually confirmable smoking
B: slightly visually confirmable smoking, but a very small amount of smoking
C: visually confirmable smoking, but a small amount of smoking
D: easily visually confirmable smoking, and a large amount of smoking

### <Method for measuring Raman intensity ratio>

The ratio between the Raman intensities before and after ultraviolet laser irradiation was measured by the following method.

The measurement sample here used was the print product produced in evaluation of the print density.

While Raman spectrum measurement conditions are as follows, the following measurement conditions, for example, the laser output and the irradiation time can be appropriately modified, for example, when any damage by the laser used for the measurement is found in the print product, when fluorescence is intense and/or when the content of titanium oxide is low and the Raman intensity is low. It is noted that the Raman intensities of the printed region and the non-printed region, here adopted, are the numerical values measured under the same conditions.

The number of counts of the Raman intensity is preferably in the range of 10,000 or less from the viewpoint of suppression of the variation in measurement value. Accordingly, measurement conditions were appropriately modified so that the number of counts of the Raman intensity was in the range of 10,000 or less. Measurement was performed in the following measurement conditions ten times, any numerical value falling out of the average value ± 2 SD (standard deviation) was excluded, and then the average was again determined and defined as the average value of the Raman intensity.
- Apparatus: inVia Raman microscope QUONTOR manufactured by Renishaw plc.
- Excitation laser: 532 nm
- Laser power: 50 mW (at an output of 100%)
- Laser output: 10%
- Measurement mode: confocal mode
- Irradiation time: 0.3 sec
- Cumulated number: 10
- Laser spot size: 2.5 µm
- Objective lens: 20x

The measurement was performed in accordance with the following methods.
(1) A reference specimen (monocrystalline silicon, manufactured by Renishaw plc.) was used to perform calibration of the Raman shift position (monocrystalline silicon, 520.5 cm⁻¹).
(2) A sheet-like sample was installed on a stage. A holding member was, if necessary, installed so that such a sheet was kept as a flat surface.
(3) Focusing was performed in the apparatus and observation (set by a simulated laser so that the smallest focus was achieved) was performed. The printed region was observed so that a visually confirmable blackest position was at the center of a guide displayed in measurement. The non-printed region was observed with being apart by a distance of 300 µm or more from the printed region.
(4) The resulting Raman spectrum was subjected to baseline correction (intelligent correction) with processing software (Wire5.2 manufactured by Renishaw plc.) attached to the apparatus. The baseline was corrected according to polynomial expression 11 of the processing software.
(5) The respective peak intensities of 447 ± 10 cm⁻¹ in the case of rutile-type titanium oxide and 515 ± 10 cm⁻¹ in the case of anatase-type titanium oxide were read, and the Raman intensity ratio was calculated according to the following expression. Raman intensity ratio = Peak intensity in printed region/Peak intensity in non-printed region
(6) Measurement was made at 10 positions in each of the printed region (printed portion) and the non-printed region (non-printed portion), and any numerical value falling out of the average value ± 2 SD (standard deviation) was excluded, and then the average was again determined and defined as the average value of the Raman intensity.

**Table 1-1**

| | Air permeability | Length-weighted average fiber length | Print layer | | | Evaluation | | | |
|---|---|---|---|---|---|---|---|---|---|
| | | | Titanium oxide | | Thickness | Raman intensity ratio | Smoothness after printing | Print density | Amount of smoking |
| | | | Concentration | Content | | | | | |
| | sec | mm | % by mass | g/m² | µm | | | | |
| Example 1 | 47,000 | 0.73 | 1 | 0.2 | 20 | 0.04 | C | C | B |
| Example 2 | 13,500 | 0.80 | 1 | 0.2 | 20 | 0.04 | B | C | B |
| Example 3 | 400 | 0.90 | 1 | 0.2 | 20 | 0.04 | A | C | B |
| Example 4 | 13,500 | 0.80 | 3 | 0.6 | 20 | 0.05 | B | B | B |
| Example 5 | 13,500 | 0.80 | 5 | 1.1 | 20 | 0.24 | A | B | B |
| Example 6 | 13,500 | 0.80 | 15 | 3.2 | 20 | 0.29 | A | C | C |
| Example 7 | 13,500 | 0.80 | 5 | 0.4 | 8 | 0.24 | A | B | B |
| Example 8 | 13,500 | 0.80 | 5 | 1.7 | 30 | 0.24 | B | B | B |
| Example 9 | 13,500 | 0.80 | 5 | 2.2 | 40 | 0.24 | C | B | B |
| Example 10 | 13,500 | 0.80 | 5 | 0.9 | 20 | 0.24 | A | B | B |
| Example 11 | 13,500 | 0.80 | 5 | 1.1 | 20 | 0.24 | C | A | B |
| Example 12 | 13,500 | 0.80 | 1 | 0.2 | 20 | 0.04 | A | C | B |
| Example 13 | 13,500 | 2.20 | 3 | 0.6 | 20 | 0.06 | A | B | B |
| Example 14 | 13,500 | 0.60 | 3 | 0.6 | 20 | 0.06 | C | B | B |
| Comparative Example 1 | 99,999 | - | 15 | 3.2 | 20 | 0.29 | D | C | C |
| Comparative Example 2 | 55,000 | 0.80 | 15 | 3.2 | 20 | 0.29 | D | C | C |
| Comparative Example 3 | 13,500 | 0.80 | 30 | 7.2 | 20 | 0.33 | A | C | D |
| Comparative Example 4 | 13,500 | 0.80 | 0.1 | 0.02 | 20 | 0.02 | A | D | B |

**Table 1-2**

| | Air permeability | Length-weighted average fiber length | Print layer | | | Thickness of resin layer | Evaluation | | | |
|---|---|---|---|---|---|---|---|---|---|---|
| | | | Titanium oxide content | Inorganic pigment content | Thickness | | Raman intensity ratio | Smoothness after printing | Print density | Amount of smoking |
| | sec | mm | g/m² | g/m² | µm | µm | | | | |
| Example 15 | 47,000 | 0.73 | 1.0 | 0.0 | 1.5 | 15 | 0.01 | C | A | A |
| Example 16 | 13,500 | 0.80 | 1.0 | 0.0 | 1.5 | 15 | 0.01 | B | A | A |
| Example 17 | 400 | 0.90 | 1.0 | 0.0 | 1.5 | 15 | 0.01 | A | A | A |
| Example 18 | 13,500 | 0.80 | 4.0 | 0.0 | 3.8 | 15 | 0.01 | C | A | A |
| Example 19 | 13,500 | 0.80 | 0.4 | 0.0 | 1.5 | 15 | 0.04 | A | B | A |
| Example 20 | 13,500 | 0.80 | 0.1 | 0.0 | 1.5 | 15 | 0.10 | A | C | A |
| Example 21 | 13,500 | 0.80 | 1.0 | 0.0 | 1.5 | 7 | 0.01 | C | A | A |
| Example 22 | 13,500 | 0.80 | 1.0 | 0.0 | 1.5 | 50 | 0.01 | A | A | A |
| Example 23 | 13,500 | 0.80 | 1.0 | 0.0 | 1.5 | 300 | 0.01 | A | C | A |
| Example 24 | 13,500 | 0.80 | 1.0 | 3.0 | 3.3 | 15 | 0.01 | A | A | A |
| Example 25 | 13,500 | 0.80 | 0.4 | 15.6 | 13.3 | 15 | 0.04 | A | B | A |
| Example 26 | 13,500 | 2.20 | 1.0 | 0.0 | 1.5 | 15 | 0.01 | A | A | A |
| Example 27 | 13,500 | 0.64 | 1.0 | 0.0 | 1.5 | 15 | 0.01 | C | A | A |
| Example 28 | 400 | 0.90 | 1.5 | 22.5 | 20.0 | 15 | 0.01 | A | B | C |
| Example 29 | 47,000 | 0.73 | 0.04 | 0.0 | 2.0 | 15 | 0.01 | B | C | A |
| Comparative Example 5 | 99,999 | - | 1.0 | 0.0 | 1.5 | 15 | 0.01 | D | A | A |
| Comparative Example 6 | 55,000 | 0.73 | 1.0 | 0.0 | 1.5 | 15 | 0.01 | D | A | A |
| Comparative Example 7 | 13,500 | 0.80 | 0.02 | 0.0 | 1.5 | 15 | 0.20 | B | D | A |
| Comparative Example 8 | 13,500 | 0.80 | 5.6 | 0.0 | 5.4 | 15 | 0.01 | D | A | A |

As shown in Table 1, a print product excellent in smoothness after printing and higher in print density was obtained by direct printing with ultraviolet laser, onto a medium for ultraviolet laser printing which comprised a substrate and a print layer comprising titanium oxide directly stacked on the substrate, and in which the air permeability of a substrate layer was 50,000 seconds or less and the titanium oxide content in the print layer was 0.04 g/m² or more and 5.0 g/m² or less.

On the other hand, each of the mediums for printing of Comparative Examples 1, 2, 5 and 6, in which the air permeability of the substrate layer was more than 50,000 seconds, caused the occurrence of unevenness after printing and inferior smoothness after printing. Each of the mediums for printing of Comparative Examples 4 and 7, in which the titanium oxide content in the print layer was less than 0.04 g/m², could not provide any sufficient print density. The medium for printing of Comparative Example 3, in which the titanium oxide content in the print layer was more than 5.0 g/m², caused discoloration of titanium oxide by irradiation with ultraviolet laser, on a relatively front surface of the print layer, and thus caused a large amount of smoking, although allowed the occurrence of unevenness after printing to be suppressed. The medium for printing of Comparative Example 8, in which the titanium oxide content in the print layer was more than 5.0 g/m² and which further comprised a resin layer on the print layer, caused the occurrence of unevenness after printing and inferior smoothness after printing, although allowed smoking by irradiation with ultraviolet laser to be suppressed.

### Industrial Applicability

The medium for ultraviolet laser printing of the present invention, in which titanium oxide is discolored due to irradiation with ultraviolet laser, thus can provide a print product which is excellent in viewability and excellent in smoothness after printing, and furthermore allows smoking in printing to be suppressed. The medium for ultraviolet laser printing and the print product of the present invention are each suitably applied to processed articles such as a package, a label, and a pressure-sensitive adhesive tape, on which variable information such as a date and a bar code is printed. Furthermore, the method for producing a print product of the present invention is suitably applied to printing of variable information onto, for example, a package, a label, and a pressure-sensitive adhesive tape.

### Reference Signs List

100 medium for printing
10 substrate
20 print layer
30 resin layer

## Claims

1. A medium for ultraviolet laser printing, comprising a substrate layer and a print layer comprising titanium oxide, wherein
the substrate layer and the print layer are in direct contact with each other,
an air permeability of the substrate layer is 50,000 seconds or less, and
a titanium oxide content in the print layer is 0.04 g/m² or more and 5.0 g/m² or less.

2. The medium for ultraviolet laser printing according to claim 1, wherein the substrate layer includes a paper substrate layer, and pulp constituting the paper substrate layer has a length-weighted average fiber length of 0.70 mm or more.

3. The medium for ultraviolet laser printing according to claim 1, wherein the print layer is a laminate layer comprising titanium oxide or a coating layer comprising titanium oxide.

4. The medium for ultraviolet laser printing according to claim 1, wherein the print layer has a thickness of 1.0 µm or more and 45 µm or less.

5. The medium for ultraviolet laser printing according to claim 1, further comprising a resin layer on the print layer.

6. A print product obtained from the medium for ultraviolet laser printing according to any one of claims 1 to 5, wherein
the print layer has a printed region comprising discolored titanium oxide in at least one portion thereof, and
a ratio of a Raman intensity assigned to titanium oxide in the printed region to a Raman intensity assigned to titanium oxide in a non-printed region is 0.70 or less.

7. A processed article obtained with the medium for ultraviolet laser printing according to any one of claims 1 to 5.

8. A processed article obtained with the print product according to claim 6.

9. Use of the medium for ultraviolet laser printing according to any one of claims 1 to 5, for ultraviolet laser printing.

10. A method for producing a print product, comprising a step of performing printing by irradiation of a medium for ultraviolet laser printing, with ultraviolet light, and thus discoloration of an irradiated region, wherein the medium for printing is the medium for ultraviolet laser printing according to any one of claims 1 to 5.
